# EUROPEAN PATENT APPLICATION

(11) **EP 2 006 174 A2**
(43) Date of publication of application: **24.12.2008**
(21) Application number: 08005211.1
(22) Date of filing: 19.03.2008
(51) Int. Cl.: B60S 1/38

(54) **Blade components fitting system**

(30) Priority: 22.06.2007 BR PI0704580
(71) Applicant: Eletromecanica Dyna S/A, 07042-010 São Paulo (BR)
(72) Inventor: Nacamuli, Marc, Vila Nova Conceicao CEP 04511010 San Paulo (BR)
(74) Representative: Zinkler, Franz

(57) **Abstract**

The present invention relates to a blade components fitting system comprising a blade (2) provided with three main parts: a central arch (3), two secondary arches (4) and hinging devices (5). The system allows fitting between the profiles (7b) and dents (4a) to happen by pressure, with a little interference ensuring safe connection between the parts, preventing disassembly at the moment the blade (2) is operating. Additionally, the fitting between the profiles (6c) and dents (3a) happens by pressure with a little interference ensuring safe connection between the parts, preventing disassembly at the moment the blade (2) is operating.

## Description

The present patent refers to a fitting system for components composing the blade of an automotive vehicle.

### Prior art description

Several devices applied on windshield wiper blades are known in the art. However, a great inconvenience in the application of these devices relates to adjusting the wiping blade to the vehicle glass surface.

One of the difficulties found to apply the blades onto vehicles windshields relates to the curvature of said windshields, which shall be followed by the wiper blade all along the mechanism course, so as to provide optimal performance to the whole system.

For mechanisms with a single hinge, there is no perfect blade adjustment on the most curved portions of the windshield, due to the structural stiffness of the arms composing the cleaning mechanisms with a single hinged arm, resulting in loss of cleaning efficiency for that area of the glass.

Two-hinged arms are also known for use in windshields cleaning mechanisms. However, the difficulty found in these mechanisms relates to the hinging accuracy between the arches composing the system, which require, simultaneously, a perfect adjustment between said arches, by eliminating undesired gaps, but making the angular moving of the arches in relation to each other possible.

Some solutions have already been developed to solve the above mentioned inconveniences, such as patent PI0003099-6, disclosing a hinging system between windshield wipers blade components, whose objective is to provide a perfect adjustment between the wiper blade and the vehicle windshield.

The system comprises the joint of two arches, a larger one and a smaller one, isolated by a plastic joint and connected by a plastic axis and coupling means, and hinging of said larger and smaller arches.

However, this blade may only be assembled in the production line and delivered ready to the supplier, as said assembly requires expert labor.

### Brief description of drawings

Fig. 1 is a front view of the system object of the present application;
Fig. 2 is a detailed view of the fitting between the central arch and the secondary arch, elements of the system object of the present application;

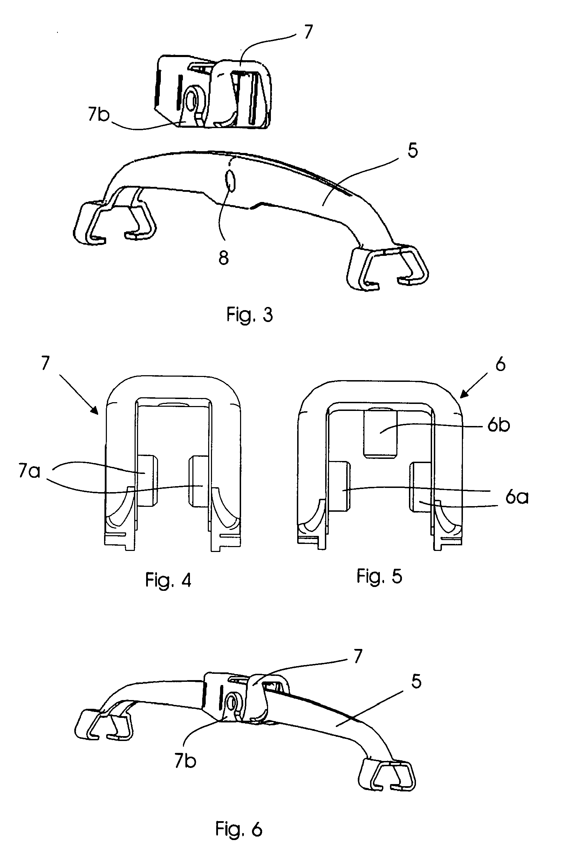

Fig. 3 is a perspective view of the joint being fitted into the hinging device, elements of the system object of the present application;
Fig. 4 is a detailed view of the joint to be fitted into the hinging device, elements of the system object of the present application;
Fig. 5 is a detailed view of the joint to be fitted into the secondary arch, elements of the system object of the present application;
Fig. 6 is a perspective view of the joint fitted into the hinging device, elements of the system object of the present application;

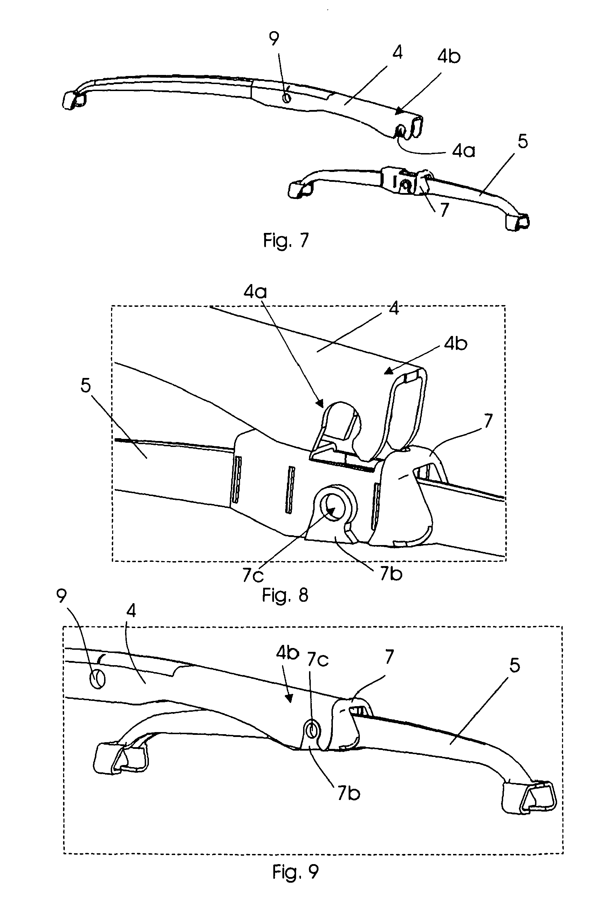

Fig. 7 is a perspective view of the secondary arch being fitted into the hinging device joint, elements of the system object of the present application;
Fig. 8 is a detailed view of the secondary arch being fitted into the hinging device joint, elements of the system object of the present application;
Fig. 9 is a detailed view of the secondary arch fitted into the hinging device joint, elements of the system object of the present application;
Fig. 10 is a perspective view of the joint being fitted into the secondary arch, elements of the system object of the present application;
Fig. 11 is a perspective view of the joint fitted into the secondary arch, elements of the system object of the present application;
Fig. 12 is a perspective view of the central arch being fitted into the secondary arch joint, elements of the system object of the present application;

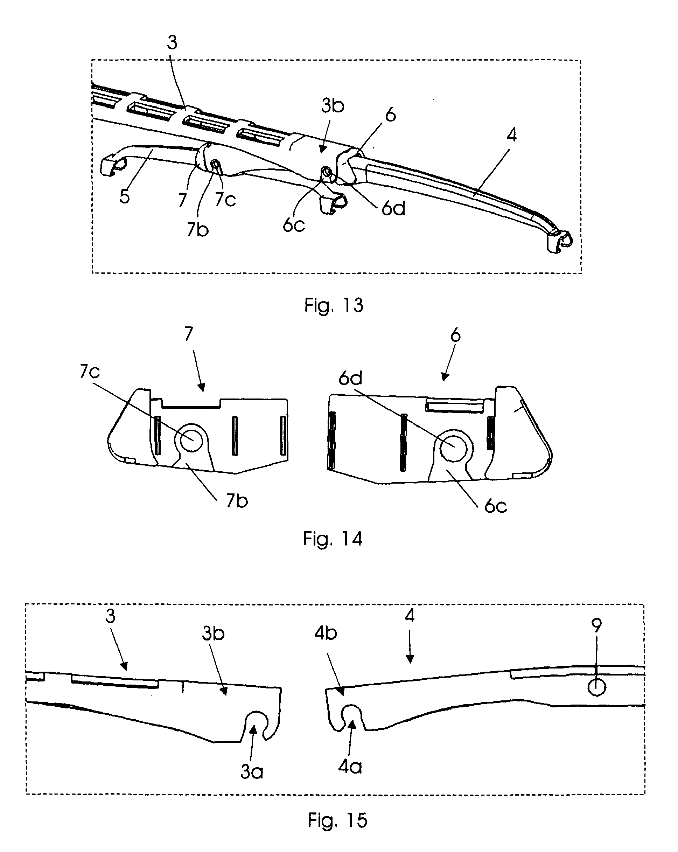

Fig. 13 is a perspective view of the central arch fitted into the secondary arch joint, elements of the system object of the present application;
Fig. 14 shows detailed views of the joints, elements of the system object of the present application; and
Fig. 15 shows detailed views of the dents, elements of the system object of the present application.

### Detailed description of drawings

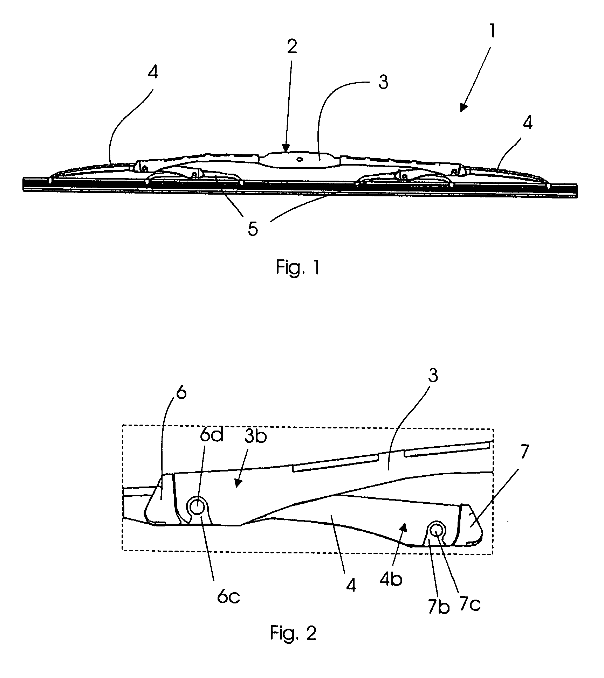

As it may be seen from Fig. 1, a system 1, comprising a blade 2 provided with three main parts: a central arch 3, two secondary arches 4 and hinging devices 5.

The secondary arches 4 have a dent 4a disposed at one of its ends 4b.

The hinging devices 5 have a swiveling joint 7 preferably provided on its central portion, which has side pins 7a for fitting into holes 8 of hinging devices 5.

The joint 7 has external profiles 7b with shape fitting to dent 4a of secondary arch 4, allowing its perfect fitting with no gaps, thus providing hinging between hinging device 5 and secondary arches 4.

The fitting between profiles 7b and dents 4a occurs by pressure, with a little interference ensuring safe connection between the parts, preventing disassembly at the moment blade 2 is operating.

In the fitting process, joint 7 plastic material is compressed to couple hinging device 5, whereby profiles 7b of joint 7 are provided with a central hole 7c allowing this action.

Likewise, the hinging between secondary arches 4 and the central arch 3 happens with the same principle as the secondary arch 4 hinging to the hinging devices 5, as it will be explained below.

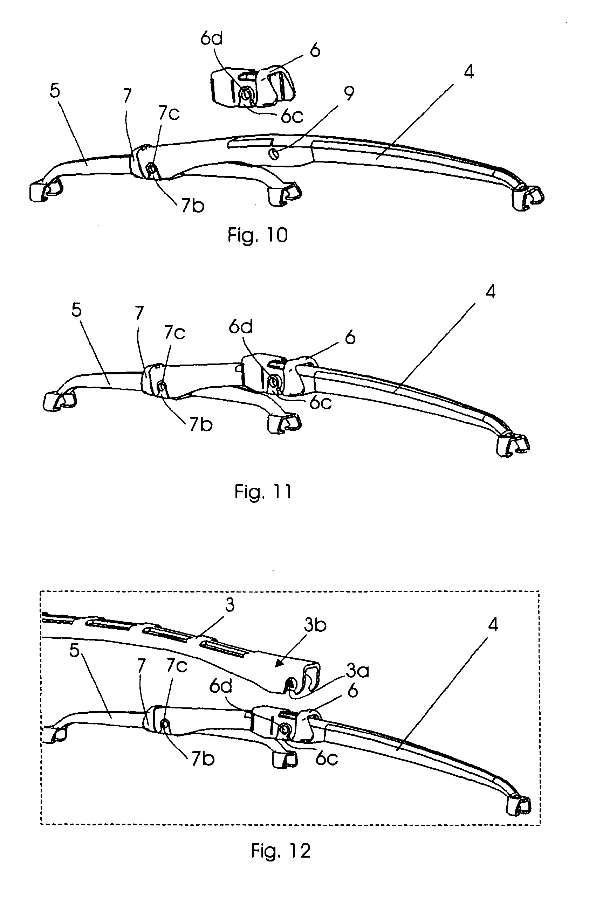

As it may be seen from Fig. 10, the central arch 3 has dents 3a disposed on its ends 3b, and the secondary arches 4 are fitted to each end 3b, as it will be explained below.

Secondary arches 4 have a swiveling joint 6 preferably provided on its central portion, and having internal side pins 6a for fitting into orifices 9 on secondary arches 4, and an internal upper pin 6b for guiding and positioning joint 6, which may not be fitted to the opposite position, and consequently, secondary arch 4 may not be fitted into central arch 3 by mistake.

The joint 6 has external profiles 6c with shape fitting to dents 3a of central arch 3, allowing its perfect fitting with no gaps, thus providing hinging between central arch 3 and secondary arches 4.

The fitting between profiles 6c and dents 3a occurs by pressure, with a little interference ensuring safe connection between the parts, preventing disassembly at the moment blade 2 is operating.

In the fitting process, joint 6 plastic material is compressed to couple secondary arch 4, whereby profiles 6c of joint 6 are provided with a central hole 6d allowing this action.

It is important to emphasize that the construction of all elements in system 1 and their respective fittings do not allow them to be assembled by mistake, due to a series of guides and locks, as described in the present patent application.

Further, the fitting between joints 6, 7 and arches 3, 4, increases the assembly strength, preventing them from getting loose when submitted to opposite forces.

The request in the present application is characterized by its fitting system 1, which keeps the same working functions in the vehicles as the previous model, its differential and great advantage being the easy assembly between the components, which will be made under light manual pressure from now on.

It will be obviously observed that while the above has been described as an illustrative example of this invention, all other changes and variations made to this invention, as it should be apparent to those skilled in the art, are considered within the wide scope and field of action of this invention, according to the attached claims.

## Claims

1. **"BLADE COMPONENTS FITTING SYSTEM"** comprising a blade (2) provided with three main parts: a central arch (3), two secondary arches (4) and hinging devices (5); the system is **characterized in that** the fitting between the profiles (7b) and dents (4a) occurs by pressure, with a little interference ensuring safe connection between the parts, preventing disassembly at the moment the blade (2) is operating; wherein the fitting between profiles (6c) and dents (3a) is made by pressure, with a little interference ensuring safe connection between the parts, preventing disassembly at the moment the blade 2 is operating .

2. **"BLADE COMPONENTS FITTING SYSTEM"** as claimed in claim 1, **characterized in that** the secondary arches (4) have a dent (4a) disposed at one of its ends (4b).

3. **"BLADE COMPONENTS FITTING SYSTEM"** as claimed in claim 2, **characterized in that** the hinging devices (5) have a swiveling joint (7) provided on its central portion having side pins (7a) for fitting into holes (8) of hinging devices (5).

4. "**BLADE COMPONENTS FITTING SYSTEM"** as claimed in claim 3, **characterized in that** the joint (7) has external profiles (7b) with shape fitting to dent (4a) in the secondary arch (4).

5. **"BLADE COMPONENTS FITTING SYSTEM"** as claimed in claim 4, **characterized in that** the profiles (7b) of joint (7) have a central hole (7c).

6. **"BLADE COMPONENTS FITTING SYSTEM"** as claimed in claim 1, **characterized in that** the central arch (3) has dents (3a) disposed on its ends (3b), and at each end (3b) the secondary arches (4) are fitted.

7. **"BLADE COMPONENTS FITTING SYSTEM"** as claimed in claim 6, **characterized in that** the secondary arches (4) have a swiveling joint (6) provided on its central portion and having internal side pins (6a) for fitting into holes (9) of the secondary arches (4) and an internal upper pin (6b) for guiding and positioning the joint (6).

8. **"BLADE COMPONENTS FITTING SYSTEM" as claimed** in claim 7, **characterized in that** the joint (6) has external profiles (6c) with shape fitting to dents (3a) on the central arch (3).

9. **"BLADE COMPONENTS FITTING SYSTEM"** as claimed in claim 8, **characterized in that** the profiles (6c) of joint (6) have a central hole (6d).
